# EUROPÄISCHE PATENTSCHRIFT

(11) **EP 2 405 761 B1**
(45) Veröffentlichungstag und Bekanntmachung des Hinweises auf die Patenterteilung: **13.11.2013**
(21) Anmeldenummer: 10708176.2
(22) Anmeldetag: 03.03.2010
(51) Int. Cl.: A22C 9/00, A23B 4/28, A23L 1/318

(54) **MASCHINE ZUR BEARBEITUNG VON LEBENSMITTELPRODUKTEN**
MACHINE FOR PROCESSING FOOD PRODUCTS
MACHINE POUR TRANSFORMER DES PRODUITS ALIMENTAIRES

(30) Priorität: 13.03.2009 DE 102009012658
(43) Veröffentlichungstag der Anmeldung: 18.01.2012
(73) Patentinhaber: Schröder Maschinenbau KG, 33824 Werther (DE)
(72) Erfinder: DANWERTH, Peter J., 33803 Steinhagen (DE)
(74) Vertreter: Ter Meer Steinmeister & Partner
(86) Internationale Anmeldenummer: PCT/EP2010/052726
(87) Internationale Veröffentlichungsnummer: WO 2010/102939

(56) Entgegenhaltungen:
- EP-A1- 0 561 105
- EP-A1- 0 845 215
- DE-A1- 3 034 284
- DE-C1- 19 530 044
- Günther Foodprocessing: "PI81/ 184 MC2R Vollautomatische reversier-Servo-Injektoren" 5. Mai 2010 (2010-05-05), Seiten 1-2, XP002581144 Gefunden im Internet: URL:http://www.guenther-foodtech.de/images /stories/pdf%20produkte/Produktinfo%20PI%2 081-184.pdf> [gefunden am 2010-05-05]
- Rühle/ Anonymous: "Das Pökelzentrum mit 56 oder 112 Nadeln" 5. Mai 2010 (2010-05-05), Seiten 1-4, XP002581145 Gefunden im Internet: URL:http://www.ruehle-hightech.de/files/do cs/IR_56_-_112_1.pdf> [gefunden am 2010-05-05]

## Beschreibung

Die Erfindung betrifft eine Maschine zur Bearbeitung von Lebensmittelprodukten, mit einem durch einen Motor und einen Antriebszug oszillierend antreibbaren Arbeitswerkzeug, einer elektronischen Steuereinrichtung, und einem Auslösesystem, das einen im Getriebezugzug für das Arbeitswerkzeug angeordneten Signalgeber aufweist, der dazu ausgebildet ist, in jedem Zyklus ein Referenz-Zeitsignal auszugeben, und das in jedem Zyklus der oszillierenden Bewegung des Arbeitswerkzeugs zu einem bestimmten Zeitpunkt eine vorgegebene Aktion der Maschine auslöst.

Ein typisches Beispiel für eine Maschine, bei der sich die Erfindung anwenden lässt, ist eine Pökelmaschine wie sie etwa in DE 195 30 044 C1 beschrieben wird. Das Arbeitswerkzeug wird dort durch einen Nadelträger gebildet, der mit einer Vielzahl von Pökelnadeln bestückt ist, die bei einer Absenkbewegung des Arbeitswerkzeugs in das Lebensmittelprodukt, z. B. Fleisch oder Schinken, einstechen, so dass Pökellake durch die hohlen Nadeln in das Fleisch injiziert wird. Während jedes Hubes oder Arbeitszyklus des Nadelträgers müssen in der Maschine bestimmte Aktionen ausgelöst werden, z. B. das Einschalten der Lakeinjektion, das Ausschalten der Lakeinjektion sowie die Betätigung eines Abstreifers, mit dem das Fleisch beim Zurückziehen der Nadeln wieder von diesen abgestreift wird.

Für eine solche Maschine beschreibt DE 101 05 490 A1 ein Beispiel eines herkömmlichen Auslösesystems, das durch eine Anordnung von Nocken und Nockenfolgern gebildet wird.

Eine Maschine nach dem Oberbegriff das Anspruchs 1 ist aus EP 0845 215 A1 bekannt.

EP 0 561 105 A l beschreibt eine ähnliche Maschine, bei der die Geschwindigkeit des Motors geregelt wird.

DE 30 34 284 A1 beschreibt eine Pökelmaschine mit mechanisch verstellbarem Pleuelantrieb.

Aufgabe der Erfindung ist es, eine Pökelmaschine Art zu schaffen, die eine flexiblere Programmierung der in jedem Arbeitszyklus in der Maschine stattfindenden Lakeinjektionen ermöglicht. Eine solche Maschine ist im Anspruch 1 definiert.

Diese Aufgabe wird erfindungsgemäß dadurch gelöst, dass das Auslösesystem einen Zeitgeber zum Messen der seit Ausgabe des letzten Referenz-Zeitsignals vergangenen Zeit aufweist, dass in der elektronischen Steuereinrichtung für mindestens eine Arbeitsgeschwindigkeit der Maschine eine Weg/Zeit-Kurve des Arbeitswerkzeugs gespeichert und eine Position des Arbeitswerkzeugs programmierbar ist, bei der die Aktion ausgelöst werden soll, und die dazu ausgebildet ist, anhand der Weg/Zeit-Kurve den zu dieser Position gehörenden Auslösezeitpunkt zu bestimmen und die Aktion auszulösen, wenn der Zeitgeber diesen Zeitpunkt erreicht, die Steuereinrichtung weiterhin dazu ausgebildet ist, auf einem Bildschirm eine Eingabemaske zu erzeugen, in der die zu den Auslösezeitpunkten gehörenden Positionen des Arbeitswerkzeugs eingebbar sind, das Arbeitswerkzeug ein Nadelträger mit Nadeln zum Injizieren von Pökellake in die Lebensmittelprodukte ist, und die Lakezufuhr zu den Nadeln ein- und ausschaltbar ist und die von der Steuereinrichtung ausgelösten Aktionen das Einschalten und das Ausschalten der Lakezufuhr innerhalb jedes Zyklus umfassen.

Diese Maschine erlaubt eine besonders einfache und zweckentsprechende Programmierung, da unmittelbar die Sollpositionen eingegeben werden können, bei denen die betreffende Aktion ausgelöst werden soll. Beispielsweise lässt sich der Beginn der Einspritzung der Pökellake programmieren, indem einfach die Höhe der Nadeln eingegeben wird, bei der die Einspritzung beginnen soll. Diese Höhe wird von der Dicke des zu pökelnden Fleisches abhängig sein und kann ohne aufwendige Umrechnungen direkt in die Steuereinrichtung der Maschine eingegeben werden.

Das oszillierend angetriebene Arbeitswerkzeug führt typischerweise eine nichtlineare Bewegung aus. Die in der Steuereinrichtung gespeicherte Weg/Zeit-Kurve erlaubt es, trotz dieser nichtlinearen Bewegung zu jeder Position des Arbeitswerkzeugs den Zeitpunkt innerhalb des betreffenden Arbeitszyklus zu finden, zu dem die Aktion ausgelöst werden muss, wobei das Referenz-Zeitsignal als Zeitreferenz benutzt wird.

Wenn die Arbeitsgeschwindigkeit der Maschine variiert werden kann, also beispielsweise die Taktzeit der Pökelmaschine erhöht oder verringert werden kann, so wird die jeweilige Weg/Zeit-Kurve zwar von der gewählten Arbeitsgeschwindigkeit abhängig sein, doch lässt sich diese Abhängigkeit durch eine geeignete Skalierung der Kurve eliminieren. Im Ergebnis läuft dies darauf hinaus, dass die Kurve den Weg des Arbeitswerkzeugs nicht unmittelbar in Abhängigkeit von der Zeit angibt, sondern vielmehr in Abhängigkeit vom Drehwinkel des Antriebsmotors, der seinerseits proportional zur Zeit zunimmt, mit einer durch die jeweilige Arbeitsgeschwindigkeit bestimmten Proportionalitätskonstanten.

Vorteilhafte Ausgestaltungen der Erfindung sind in den Unteransprüchen angeben.

Im folgenden wird ein Ausführungsbeispiel anhand der Zeichnung näher erläutert.

Es zeigen:
- Fig. 1: eine schematische Darstellung einer erfindungsgemäßen Pökelmaschine;
- Fig. 2: eine Eingabemaske auf einem Bildschirm einer Bedienungs-einheit für die Pökelmaschine nach Fig. 1; und
- Fig. 3: ein Beispiel für die Bestimmung von Arbeitsabläufen in der Pökelmaschine anhand einer Weg/Zeit-Kurve.

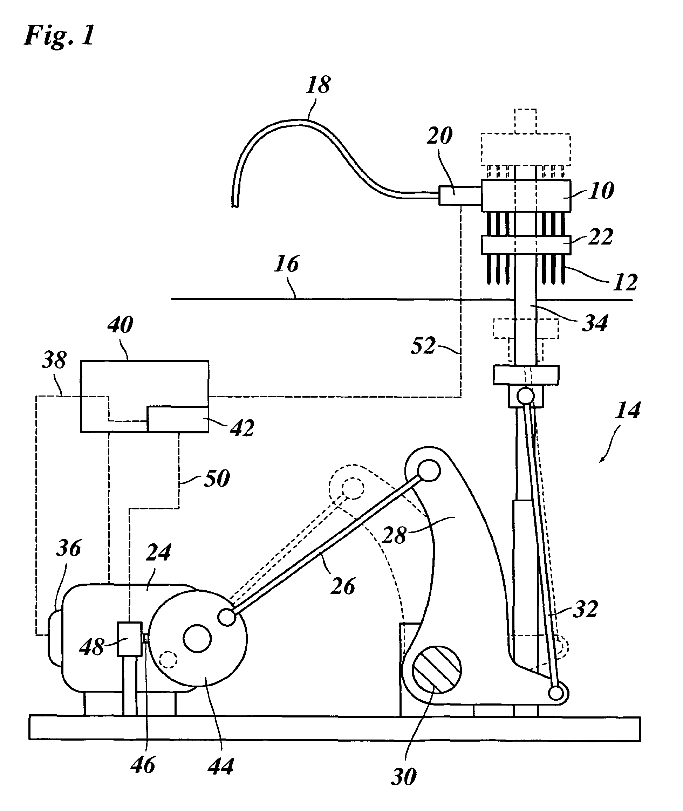

Die in Fig. 1 gezeigte Pökelmaschine weist als Arbeitswerkzeug 10 einen Nadelträger auf, der mit hohlen Nadeln 12 bestückt ist. Mit Hilfe eines Antriebszuges 14 ist das Arbeitswerkzeug relativ zu einem Förderer 16, auf dem zu pökelnde Lebensmittelprodukte zugeführt werden, oszillierend auf und ab bewegbar, so dass die Nadeln 12 in die Produkte einstechen, um Pökellake zu injizieren. Die Pökellage wird den Nadeln 12 über einen Schlauch 18 zugeführt, und Beginn und Ende der Einspritzung von Lake werden durch ein Lakeventil 20 gesteuert.

Die Nadeln 12 durchsetzen einen Abstreifer 22, der relativ zu dem Arbeitswerkzeug 10 in vertikaler Richtung beweglich ist, um die gepökelten Produkte wieder von den Nadeln abzustreifen, wenn diese aus dem Produkt zurückgezogen werden.

Der Antriebszug 14 für das Arbeitswerkzeug umfasst einen elektrischen Motor 24, der über ein nicht näher gezeigtes Kegelzahnradgetriebe und eine Pleuelstange 26 eine Schwinge 28 antreibt, die um eine Welle 30 schwenkbar ist. Die Schwinge 28 wird so in eine oszillierende Schwenkbewegung versetzt. Ein Arm der Schwinge 28 ist über eine Hubstange 32 gelenkig mit einer vertikalbeweglich geführten Hubsäule 34 verbunden, an der das Arbeitswerkzeug 10 montiert ist. Auf diese Weise wird die oszillierende Schwenkbewegung der Schwinge 28 in eine oszillierende vertikale Hubbewegung des Arbeitswerkzeugs 10 umgesetzt. Durch Verändern der Lage des Anlenkpunktes der Pleuelstange 26 an die Schwinge 28 lässt sich die Hubhöhe des Arbeitswerkzeugs nach Bedarf einstellen.

Dem Rotor des Motors 24 ist ein Winkelgeber 36 zugeordnet, der in kleinen Winkelinkrementen den von der Ausgangswelle des Motors zurückgelegten Weg misst und ein die einzelnen Inkremente anzeigendes Taktsignal 38 an eine elektronische Steuereinrichtung 40 liefert. Das Taktsignal 38 dient dort als Zeittakt eines elektronischen Zeitgebers 42.

Auf der Ausgangswelle des von dem Motor 24 angetriebenen Getriebes sitzt eine Kurbelscheibe 44, an die das eine Ende der Pleuelstange 26 angelenkt ist. Eine vollständige Umdrehung der Kurbelscheibe 44 entspricht somit einem vollständigen Zyklus der Hubbewegung des Arbeitswerkzeugs 10. An der Kurbelscheibe 44 sitzt eine Markierung 36, die sich bei jeder Umdrehung der Kurbelscheibe einmal an einem Signalgeber 48 vorbei bewegt, der diesen Durchgang der Markierung 46 erfasst und ein entsprechendes Referenz-Zeitsignal 50 an den Zeitgeber 42 in der elektronischen Steuereinrichtung liefert.

Der Winkelgeber 36 unterteilt den Zyklus des Arbeitswerkzeugs 10 in eine Anzahl von Inkrementen, die von der Winkelauflösung des Winkelgebers 36 und von dem Übersetzungsverhältnis des Getriebes zwischen dem Motor 24 und der Kurbelscheibe 44 abhängig ist. Diese Anzahl bestimmt die Auflösung, mit der jeder einzelne Zyklus des Arbeitswerkzeugs 10 in zeitlich aufeinanderfolgenden Phasen aufgelöst wird. Der Zeitgeber 42 zählt nun jeweils vom Eintreffen des Referenz-Zeitsignals 50 an die Takte des Taktsignals 38. Der so erhaltene Zählwert gibt in jedem Zyklus des Arbeitswerkzeugs 10 jederzeit an, in welcher Phase sich das Arbeitswerkzeug gerade befindet.

In der Praxis wird im allgemeinen der Motor 24 mit konstanter Drehzahl laufen, so dass das Taktsignal 38 eine konstante Frequenz hat und folglich die Phasen, in die der Zyklus des Arbeitswerkzeugs unterteilt wird, alle dieselbe zeitliche Dauer haben. Für die Funktionsweise der Maschine ist dies jedoch nicht zwingend. Der Begriff "Zeitgeber" 42 wurde nur anschaulichkeitshalber gewählt und bezeichnet allgemein ein Element, das die Takte des Taktsignals 38 vom Referenz-Zeitsignal 50 an zählt.

In gezeigten Beispiel entspricht das Referenz-Zeitsignal 50 dem oberen Totpunkt des Arbeitswerkzeugs 10. Auch dies ist jedoch für die Funktionsweise der Maschine nicht zwingend.

Die Steuereinrichtung 40 steuert verschiedene Komponenten der Maschine, unter anderem den Motor 24 und das Lakeventil 20, das über eine Leitung 52 Befehle zum Ein- und Ausschalten der Lakezufuhr erhält. Weiterhin steuert die Steuereinrichtung 40 nicht gezeigte Antriebsaggregate, beispielsweise Pneumatikzylinder, die die Bewegung des Abstreifers 22 relativ zu dem Arbeitswerkzeug 10 bewirken.

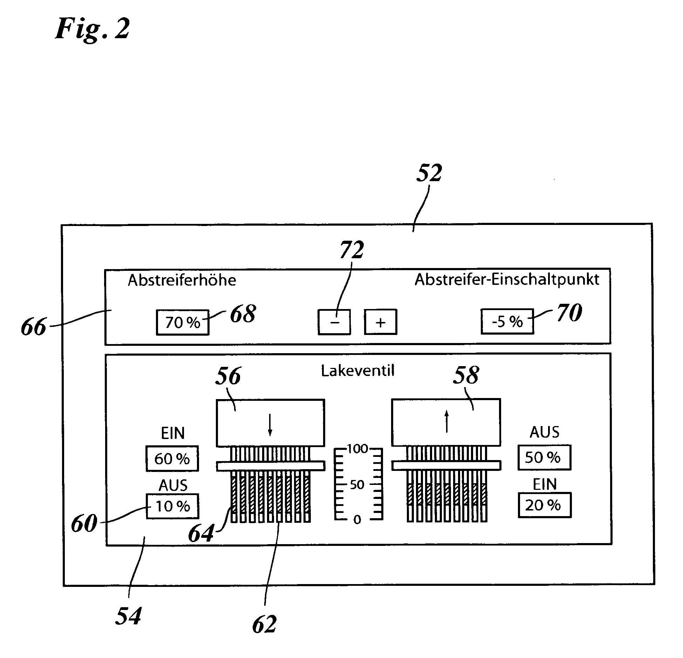

Fig. 2 zeigt eine Eingabemaske 52, die auf einem Bildschirm einer zu der elektronischen Steuereinrichtung 40 gehörenden Bedienungseinheit angezeigt wird und es erlaubt, die Pökelmaschine zu programmieren. Insbesondere dient die Eingabemaske 52 dazu, die Positionen der Nadeln 12 zu bestimmen, bei denen die Einspritzung von Pökellake beginnen und enden soll. Diese Positionen können für den Abwärtshub und den Aufwärtshub des Arbeitswerkzeugs unabhängig voneinander gewählt werden. Die Eingabemaske 52 enthält dementsprechend in einem Feld 54, das zur Programmierung des Lakeventils dient, zwei symbolische Darstellungen 56, 58 des Nadelträgers. Die Darstellung 56 bezieht sich auf den Abwärtshub und die Darstellung 58 auf den Aufwärtshub. Jeder dieser Darstellungen sind zwei Ziffernanzeigen 60 zugeordnet, die mit "EIN" und "AUS" betitelt sind und die Positionen anzeigen, in denen die Einspritzung von Lake beginnt und endet. Die Position der Nadeln wird hier in Prozent angegeben und bezeichnet die Höhe der unteren Enden der Nadeln im Verhältnis zum Gesamt-Hubweg des Arbeitswerkzeugs 10. So entspricht die Prozentangabe "0 %" der Stellung der Nadelspitzen am unteren Totpunkt und die Prozentangabe "100 %" der Position der Nadelspitzen am oberen Totpunkt. Wahlweise wäre es jedoch auch möglich, die absolute Höhe der Nadeln in mm anzugeben, und als Höhenreferenz könnte anstelle des unteren Totpunktes auch die Höhe der Oberfläche des Förderers 16 gewählt werden.

In den Darstellungen 56 und 58 sind die Hubwege der Nadeln symbolisch als Balken 62 dargestellt, und innerhalb jedes dieser Baken wird die Zeitspanne, innerhalb derer die Lakeeinspritzung aktiv ist, durch eine farblich hervorgehobene Zone 64 markiert. Auch die Position des Abstreifers 22 ist symbolisch eingezeichnet.

Ein Feld 66 der Eingabemaske 52 erlaubt es, auch die Funktionsweise des Abstreifers 22 zu programmieren. Eine Ziffernanzeige 68 gibt jeweils die gewählte Abstreiferhöhe an (wiederum in Prozent bezogen auf den gesamten Hubweg des Arbeitswerkzeugs 10). Beispielsweise bedeutet die Angabe "70 %" für die Abstreiferhöhe, dass die Entfernung des Abstreifers zu den Spitzen der Nadeln 70 % des Hubweges beträgt, während sich das Arbeitswerkzeug 10 und der Abstreifer 22 gemeinsam bewegen und die Nadeln in das Pökelgut einstechen.

Wenn beim Aufwärtshub des Arbeitswerkzeugs 10 die Nadeln aus dem Produkt zurückgezogen werden, so hat dieses die Tendenz, an den Nadeln haften zu bleiben. Deshalb wird zu einem geeigneten Zeitpunkt der Antrieb für den Abstreifer 22 aktiviert, so dass dieser sich relativ zum Arbeitswerkzeug 10 nach unten bewegt, um das Pökelgut von den Nadeln abzustreifen. In dem Feld 66 gibt eine Ziffernanzeige 70 diesen Einschaltpunkt des Abstreifers an. Im gezeigten Beispiel bedeutet die Angabe "- 5 %", dass der Abstreifer aktiviert wird, wenn sich die Nadeln in einer Position 5% vor dem unteren Totpunkt befinden.

Bei dem Bildschirm, auf dem die Eingabemaske 52 dargestellt wird, handelt es sich im gezeigten Beispiel um einen berührungsempfindlichen Bildschirm (Touch-Screen), auf dem durch Antippen der jeweiligen Ziffernanzeige 60, 68 oder 70 der Wert gewählt werden kann, dessen Einstellung verändert werden soll. Plus- und Minus-Tasten 72 ermöglichen es dann, den ausgewählten Wert in geeigneten Schritten zu erhöhen oder zu senken.

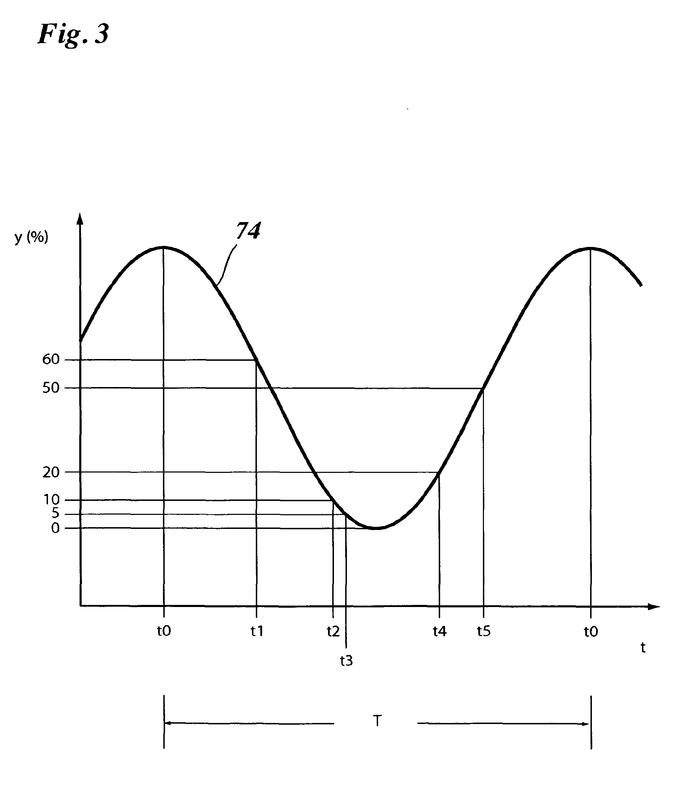

In Fig. 3 ist eine Weg/Zeit-Kurve 74 für das Arbeitswerkzeug 10 dargestellt. Diese Kurve ist in der Steuereinrichtung 40 in elektronischer Form gespeichert und dient dazu, die in der Eingabemaske 52 eingegebenen Positionen für das Ein- und Ausschalten der Lakezufuhr und die Aktivierung des Abstreifers in entsprechende Auslösezeitpunkte umzurechnen. Beispielsweise kann die Weg/Zeit-Kurve in der Form einer Tabelle gespeichert sein.

Aufgrund der oszillierenden Bewegung des Arbeitswerkzeugs 10 ähnelt die Kurve 74 einer Sinuskurve. Aufgrund des in Fig. 1 gezeigten Aufbaus des Antriebszuges 14 handelt es sich jedoch nicht um einen exakten Sinus. Die Kurve kann für eine gegebene Maschine empirisch aufgezeichnet werden, beispielsweise mit Hilfe einer in der Steuereinrichtung 40 selbst implementierten Software. Auf der y-Achse sind in Fig. 3 (in Prozentwerten) die Positionen der Spitzen der Nadeln 12 aufgetragen, und auf der t-Achse sind die zugehörigen Auslösezeitpunkte aufgetragen, ausgedrückt in Inkrementen des Winkelgebers 36. Zum Zeitpunkt t0 trifft das Referenz-Zeitsignal 50 ein und es beginnt ein neuer Zyklus T des Arbeitswerkzeugs. Zu diesem Zeitpunkt wird jeweils der Zeitgeber 42 auf null gesetzt und gestartet.

In Fig. 2 ist für den Beginn der Einspritzung von Lake während des Abwärtshubes die Nadelposition 60% angegeben. Die Kurve 74 in Fig. 3 den dazugehörigen Auslösezeit t1. Wenn der Zeitgeber 42 den Wert t1 erreicht, wird die betreffende Aktion, also das Einschalten des Lakeventils 20 ausgelöst. Entsprechend wird zum Zeitpunkt t2 das Lakeventil wieder abgeschaltet. Zum Zeitpunkt t3 wird der Abstreifer 22 aktiviert. Die Zeitpunkte t4 und t5 markieren den Beginn und das Ende einer zweiten Lakeeinspritzung während des Aufwärtshubes der Nadeln.

Auf diese Weise lassen sich die Arbeitsabläufe in der Pökelmaschine sehr einfach, bequem und zuverlässig programmieren und steuern.

Da die Zeit t in Inkrementen des Winkelgebers 36 gezählt wird, braucht die Programmierung nicht verändert zu werden, wenn sich die Drehzahl des Motors 24 ändert. Da die y-Positionen der Nadeln in Prozent des Gesamt-Hubweges angegeben sind, braucht die Programmierung auch nicht verändert zu werden, wenn durch Wahl eines anderen Anlenkpunktes der Pleuelstange 26 an die Kurbelscheibe 44 der Gesamt-Hubweg des Arbeitswerkzeugs 10 verstellt wird.

Wie das in Fig. 2 und 3 illustrierte Beispiel zeigt, bietet die Maschine insbesondere die vorteilhafte Möglichkeit, innerhalb eines einzelnen Zyklus T mehrere Lake-Einspritzphasen zu programmieren, beispielsweise eine während des Abwärtshubes und eine während des Aufwärtshubes. Das ist vor allem dann besonders vorteilhaft, wenn es sich bei dem Pökelgut beispielsweise um Schinken mit einer Schwarte handelt, die mit ihrer Schwarte auf dem Förderer 16 aufliegen. Durch die Unterbrechung der Lakezufuhr in der Nähe des unteren Totpunktes der Nadeln 12 lässt sich dann eine unerwünschte Ansammlung von Lake über der Schwarte vermeiden. Durch geeignete Wahl der Dauer der Einspritzphase oder Einspritzphasen lässt sich die insgesamt eingespritzte Lakemenge an den jeweiligen Bedarf anpassen.

## Patentansprüche

1. Maschine zur Bearbeitung von Lebensmittelprodukten, mit einem durch einen Motor (24) und einen Getriebezug (14) oszillierend antreibbaren Arbeitswerkzeug (10), einer elektronischen Steuereinrichtung (40), und einem Auslöscsystem, das einen im Getriebezug (14) für das Arbeitswerkzeug angeordneten Signalgeber (48) aufweist, der dazu ausgebildet ist, in jedem Zyklus ein Referenz-Zeitsignal (50) auszugeben, und das in jedem Zyklus (T) der oszillierenden Bewegung des Arbeitswerkzeugs (10) zu einem bestimmten Zeitpunkt (t1 - t5) eine vorgegebene Aktion der Maschine auslöst, **dadurch gekennzeichnet, dass** das Auslösesystem einen Zeitgeber (42) zum Messen der seit Ausgabe des letzten Referenz-Zeitsignal (50) vergangenen Zeit aufweist , dass in der elektronischen Steuereinrichtung (40) für mindestens eine Arbeitsgeschwindigkeit der Maschine eine Weg/Zeit-Kurve (74) des Arbeitswerkzeugs (10) gespeichert und eine Position des Arbeitswerkzeugs programmierbar ist, bei der die Aktion ausgelöst werden soll, wobei die Steuereinrichtung (40), dazu ausgebildet ist, anhand der Weg/Zeit-Kurve (74) den zu dieser Position gehörenden Auslösezeitpunkt (t1 - t5) zu bestimmen und die Aktion auszulösen, wenn der Zeitgeber (42) diesen Zeitpunkt erreicht, die Steuereinrichtung (40) weiterhin dazu ausgebildet ist, auf einem Bildschirm eine Eingabemaske (52) zu erzeugen, in der die zu den Auslösezeitpunkten (t1 - t5) gehörenden Positionen des Arbeitswerkzeugs (10) eingebbar sind, das Arbeitswerkzeug (10) ein Nadelträger mit Nadeln (12) zum Injizieren von Pökellake in die Lebensmittelprodukte ist, und die Lakezufuhr zu den Nadeln (12) ein- und ausschaltbar ist und die von der Steuereinrichtung (40) ausgelösten Aktionen das Einschalten und das Ausschalten der Lakezufuhr innerhalb jedes Zyklus (T) umfassen.

2. Maschine nach Anspruch 1, bei der der Antriebszug (14) eine Pleuelstange (26) enthält.

3. Maschine nach Anspruch 1 oder 2, bei der dem Motor (24) ein Winkelgeber (36) zur Erzeugung eines Taktsignals (38) für den Zeitgeber (42) zugeordnet ist.

4. Maschine nach einem der vorstehenden Ansprüche, bei der der Getriebezug (14) mechanisch verstellbar ist, um die Gesamt-Hubhöhe des Arbeitswerkzeugs (10) zu verändern, und bei der die Position des Arbeitswerkzeugs (10) in der Eingabemaske (52) als Prozentwert des Gesamt-Hubweges eingebbar sind.

5. Maschine nach einem der vorstehenden Ansprüche , bei der die Steuereinrichtung (40) dazu ausbildet ist, für jeden Zyklus (T) mindestens zwei in zeitlichem Abstand aufeinanderfolgende Einspritzphasen (64) zu programmieren.

6. Maschine nach einem der vorstehenden Ansprüche, bei der die Steuereinrichtung (40) dazu ausgebildet ist, die Einspritzphase oder -phasen (64), in denen Pökellake eingespritzt wird, auf der Eingabemaske (52) graphisch darzustellen.

7. Maschine nach einem der einem der vorstehenden Ansprüche , bei der dem Arbeitswerkzeug (10) ein relativ zu diesem beweglicher, aktiv antreibbarer Abstreifer (22) zugeordnet ist und eine der von der Steuereinrichtung (40) ausgelösten Aktionen die Aktivierung des Antriebs für den Abstreifer (22) ist.

## Claims

1. A machine for processing food products, comprising a processing tool (10) that is oscillatingly driven by a motor (24) and a drive train (14), an electronic control device (40), and a trigger system which comprises a signal generator (48) arranged in the drive train (14) for the processing tool and adapted to deliver a reference time signal (50) in each cycle and which triggers, in each cycle (T) of the oscillating movement of the processing tool (10), a predetermined action of the machine at a predetermined timing (t1-t5), **characterized in that** the trigger system comprises a timer (42) for measuring a time that has passed since the last occurrence of the reference time signal (50), the electronic control device (40) stores a displacement/time curve (74) of the processing tool (10) for at least one processing speed of the machine and a position of the processing tool at which the action shall be triggered is programmable in the control device, the control device (40) being adapted to determine, on the basis of the displacement/time curve (74), the trigger timing (t1-t5) corresponding to that position and to trigger the action when the timer (42) reaches this timing, the control device (40) is further adapted to generate, on a screen, an input template (52) in which the positions of the processing tool (10) belonging to the trigger timings (t1-t5) can be input, the processing tool (10) is a needle carrier having needles (12) for injecting pickling brine into the food products, and the brine supply to the needles (12) can be switched on and off and the actions triggered by the control device (40) comprise the actions of switching on and off the brine supply within each cycle (T).

2. The machine according to claim 1, wherein the drive train (14) includes a crank connecting rod (26).

3. The machine according to claim 1 or 2, wherein the motor (24) has an angular increment sensor (36) for generating a clock signal (38) for the timer (42).

4. The machine according to any of the preceding claims, wherein the drive train is adapted to be adjusted mechanically in order to change the entire stroke length of the processing tool (10), and wherein the position of the processing tool (10) can be input at the input template (52) as a percentage of the total stroke length.

5. The machine according to any of the preceding claims, wherein the control device (40) is adapted for programming, in each cycle (T) at least two injection phases (64) separated by a time gap.

6. The machine according to any of the preceding claims, wherein the control device (40) is adapted for graphically displaying, in the input template (52), the injection phase or phases (64) in which brine is injected.

7. The machine according to any of the preceding claims, wherein the processing tool (10) has associated therewith a stripper (22) that is actively driven to move relative to the processing tool, and one of said actions triggered by the control device (40) is the activation of a drive source for the stripper (22).

## Revendications

1. Machine pour transformer des produits alimentaires, comportant un outil de transformation (10) pouvant être entraîné de manière oscillante par un moteur (24) et un train d'engrenages (14), un dispositif de commande électronique (40) et un système de déclenchement qui comporte un générateur de signal (48) agencé dans le train d'engrenages (14) pour l'outil de transformation, lequel générateur de signal est conçu pour générer un signal de temps de référence (50) dans chaque cycle, et lequel système de déclenchement déclenche, dans chaque cycle (T) du mouvement oscillant de l'outil de transformation (10), une action prédéfinie de la machine à un instant déterminé (t1 - t5), **caractérisée en ce que** le système de déclenchement comporte un compteur de temps (42) pour mesurer le temps écoulé depuis la génération du dernier signal de temps de référence (50), **en ce qu'**une courbe de déplacement/temps (74) de l'outil de transformation (10) est mémorisée dans le dispositif de commande électronique (40) pour au moins une vitesse de transformation de la machine et une position de l'outil de transformation, dans laquelle l'action doit être déclenchée, peut être programmée, dans laquelle le dispositif de commande (40) est conçu pour déterminer, au moyen de la courbe de déplacement/temps (74), l'instant de déclenchement (t1 - t5) correspondant à cette position et pour déclencher l'action lorsque le compteur de temps (42) atteint cet instant, le dispositif de commande (40) étant en outre conçu pour générer un masque de saisie (52) sur un écran, masque dans lequel les positions de l'outil de transformation (10)correspondant aux instants de déclenchement (t1 - t5) peuvent être saisies, l'outil de transformation (10) est un porte-aiguilles muni d'aiguilles (12) pour injecter de la saumure dans les produits alimentaires, et l'alimentation en saumure des aiguilles (12) peut être démarrée et arrêtée, et les actions déclenchées par le dispositif de commande (40) incluent le démarrage et l'arrêt de l'alimentation en saumure à l'intérieur de chaque cycle (T).

2. Machine selon la revendication 1, dans laquelle le train d'engrenages (14) contient une bielle (26).

3. Machine selon la revendication 1 ou 2, dans laquelle un capteur d'angle (36) est couplé au moteur (24) pour générer un signal d'horloge (38) pour le compteur de temps (42).

4. Machine selon l'une des revendications précédentes, dans laquelle le train d'engrenages (14) peut être réglé mécaniquement afin de changer la longueur de course totale de l'outil de transformation (10), et dans laquelle la position de l'outil de transformation (10) peut être saisie dans le masque de saisie (52) sous la forme d'un pourcentage de la longueur de course totale.

5. Machine selon l'une des revendications précédentes, dans laquelle le dispositif de commande (40) est conçu pour programmer, pour chaque cycle (T), au moins deux phases d'injection (64) séparées par un intervalle de temps.

6. Machine selon l'une des revendications précédentes, dans laquelle le dispositif de commande (40) est conçu pour représenter graphiquement sur le masque de saisie (52) la phase ou les phases d'injection (64) au cours desquelles de la saumure est injectée.

7. Machine selon l'une des revendications précédentes, dans laquelle un racloir (22) pouvant être entraîné de manière active et mobile par rapport à l'outil de transformation (10) est couplé à ce dernier, et l'une des actions déclenchées par le dispositif de commande (40) est l'activation de l'entraînement pour le racloir (22).
